(19) Europäisches Patentamt / European Patent Office / Office européen des brevets

(11) **EP 2 251 767 A1**

(12) **EUROPEAN PATENT APPLICATION**

(43) Date of publication:
**17.11.2010 Bulletin 2010/46**

(51) Int Cl.:
*G06F 3/01* (2006.01)     *A63B 69/00* (2006.01)
*A63B 21/00* (2006.01)     *G09B 9/00* (2006.01)

(21) Application number: **09006333.0**

(22) Date of filing: **11.05.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **ETH Zurich**
**8092 Zurich (CH)**

(72) Inventor: **The designation of the inventor has not yet been filed**

(54) **Haptic interface for a virtual environment**

(57)     A haptic interface for a virtual environment for physically exchanging a force with a user (12) in a user-local environment (39, 30), comprising: an interface element (20) for physically connecting to a body member of the user (12), at least two connection elements (40, 41) are provided being connected to different points of said user-local environment (39, 30) linking (50) said interface element (20) to said user-local environment (39, 30), and a control unit for controlling the spatial position of the interface element (20) through driving at least one connection element (40). Within such an interface the two connection elements (40, 41) join in a connection point (51), wherein a distance connection element (42) is linking said interface element (20) with said connection point (51).

FIG. 4

EP 2 251 767 A1

**Description**

TECHNICAL FIELD

The invention relates to a haptic interface for a virtual environment for physically exchanging a force with a user in a user-local environment, comprising:

- an interface element for physically connecting to a body part of the user,
- at least one connection element linking said interface element to said user-local environment for controlling the spatial position of the interface element and/or the force exerted by the interface element, and
- a control unit for controlling the spatial position of the interface and/or the force exerted by the interface element, element through driving at least one connection element.

PRIOR ART

WO 95/10080 discloses a haptic interface with the features of the preamble of claim 1. The connection elements linking the interface element to the frame of the device are rigid elements limiting the use of the device. Such linked manipulators provide high position accuracy and a high rigidity of the device.
A similar device with the features of the preamble of claim 1 is shown in EP 1 452 949 A1.
Devices having such stiff connection elements disclose embodiments which are adapted to allow swinging moments of the interface element, i.e. movements along a circle line or a line on a sphere (3D-movement). It is complex to modify the movement of the interface element or end effector of such a haptic interface, since the stiff connection elements have to be modified or exchanged.
The article "Scaleable SPIDAR: A Haptic Interface For Human-Scale Virtual Environments" from Laroussi Buoguila, Masahiro Ishii, and Makoto Sato, published in S. Brewster, R. Murray-Smith (Eds.): Haptic HCI 2000, LNCS 2058, pp. 182-193, 2001 (Springer-Verlag Berlin Heidelberg) discloses a human-scale haptic device for virtual environment, which provides different aspects of force feedback sensations, associated mainly with weight, contact and inertia, to both hands within a CAVE-like space. Tensioned string techniques are used to generate such haptic sensations, while keeping the space transparent and unbulky. The device is scaleable so as to enclose different CAVE-like working space. The device is coupled with a large screen where a computer generated virtual world is displayed on the wand of the CAVE-like space.
The article "Hybrid actuation concepts for a rope robot as a haptic interface" from Joachim v. Zitzewitz, Georg Rauter, Andreas Brunschweiler and Robert Riener, published in Proc. IEEE International Conference on Biomedical Robotics and Biomechatronics, Scottsdale, Arizona, USA (2008) provide a design and control approach for a so called rope robot, wherein the connection elements comprise ropes being connected over deflection units on a frame to active and passive units which allows generating direction dependent maximal forces.
The end-effector of a rope robot as interface is supported in parallel by a number of ropes. The length of each rope can be changed by an actuator. In addition to the advantages of parallel-linked manipulators, rope robots have very little mass. The low weight of their single components has additional positive effects on the overall system dynamics.
The disclosed rope robot shows the simulation of a rowing movement comprising a mainly translational movement. In other words, the movement of the interface element describes a circle with a large radius compared to the amplitude of the translation.
It provides a general concept for rope robots to render elevated forces in a specific direction, i.e. a mainly translational movement of the interface element.
The use of ropes have the drawback that the user in such a system is not allowed to be present in space portions where the ropes are tensioned which reduces the user'sworkspace/free moving space considerably.
Papers as "Geometrical Workspace Analysis of a Cable-driven Redundant Parallel Manipulator: KNTU CDRPM" from Mohammad M. Aref et al. in IEEE/RSJ International Conference on Intelligent Robots and Systems in Nice, France, 22-26 September 2008 derive models for collision free workspaces of a manipulator.
The article "Wire-driven parallel robot: permitting collisions between wires" from Yonatan Wischnitzer et al. in The International Journal of Robotics Research, Vol. 27, No. 9, Sep-2008, pages 1007-1026, explicitly addresses the problem of colliding wires or ropes. They mention the common practice that such collisions are avoided through limitation of the moving platform trajectories. They furthermore state that opposed to rigid links, wires may tangle and the robot may still be functional allowing for a greater work space.
WO 2008/080917 provides a haptic interface using a structure with cable under tension, wherein it is stated that there would be a large maneuver angle. Said document provides a distribution of winch units for tensioning the cables.

SUMMARY OF THE INVENTION

It is an object of the present invention to provide a device with the features of the preamble of claim 1 which allows more complex movements within a larger space using a rope robot.

In this context rope, cable and wire are used synonymously for connection elements which are not stiff or rigid and represent a uni-lateral constraint.

This object is achieved with the features of the haptic device of claim 1, wherein at least two connection elements are provided being connected to different points of said user-local environment, wherein the two connection elements join in a connection point, wherein a distance connection element is linking said interface element with said connection point.

The interface element of the device is connected with at least two ropes. The ropes are connected to actuator units attached at specific points of the frame, i.e. attached at the vertical and horizontal post elements providing the space. It is also possible to attach said actuator units at different positions inside or outside the room. The tension of the ropes is controlled with said actuators and subsequent control units.

The at least two connection elements are provided being connected to different points of said frame, wherein the two connection elements join in a connection point, wherein a further connection element is linking said interface element with said connection point. The approach consists on applying appropriate tensions to the two ropes supporting the interface element which is manipulated by the operator. The force feedback felt on the operator's limb is the same as the resultant force of tension.

The distance connection element is also preferably a rope.

The robot according to the invention is adapted to be used as a general tool for user-cooperative applications and, more specifically, for haptic rendering and, more specifically, for motor learning and, more specifically, for sports simulation and training. The demand of versatility refers to the adaptability of the robot to various tasks with different workspaces and dynamics.

The setup includes sensors to measure the relevant parameters for user-cooperative control, e.g. the position of the interface element and the rope forces. In order to provide a maximum work space, the ropes used are positioned to ensure that there is always a sufficient distance between the single ropes and the user in order to avoid collisions between the ropes and the user.

Further embodiments of the invention are laid down in the dependent claims.

It is a further object of the present invention to provide a deflection unit, especially for a haptic device, which provides reduced friction. Such a deflection unit is achieved with the features of claim 11.

BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

Fig. 1 shows a schematic representation of parts of a user cooperative rope robot according to an embodiment of the invention.

Fig. 2 shows a schematic representation of a 1-DOF restrained rope robot embodiment for use with the device in Fig. 1.

Fig. 3 shows a schematic representation of user - interface - rope measurement design for use with the device in Fig. 1.

Fig. 4 shows a schematic representation of user - interface - rope embodiment of the invention for use with the device in Fig. 1.

Fig. 5 shows a schematic view of a deflection unit embodiment of the invention.

DESCRIPTION OF PREFERRED EMBODIMENTS

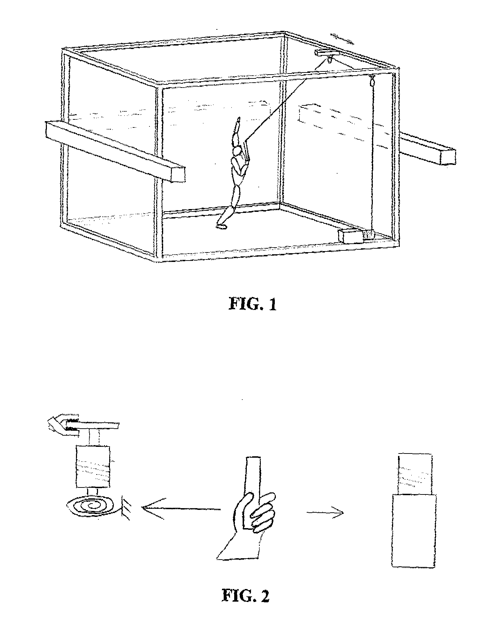

Fig. 1 shows a schematic representation of parts of a user-cooperative rope robot according to an embodiment the invention. In this context the term rope, cable and wire are used synonymously for connection elements which are not stiff or rigid and represent a uni-lateral constraint. Such robots are also referred to as wire robots, cable robots, or tendon-based robots.

The embodiment of the robot according to Fig. 1 serves as a large-scale haptic interface in a multi-modal CAVE environment. CAVE is an acronym for Cave Automatic Virtual Environment. The embodiment shown in connection with Fig. 1 is used for a sport simulation, but the principles are usable in industrial environments as well. The term CAVE is used to describe a user-local environment or room 10 within which the haptic interface 11 provides the haptic interaction with a user 12. The configuration of the presented robot is adaptable to different simulation tasks what makes the robot more versatile. Fig. 1 shows a user 12 in a tennis simulation, wherein he holds a racket as interface element 20.

The room or CAVE 10 - according to the embodiment of Fig. 1 - is the cuboid space delimited by the frame elements 13 mounted on a ground plate or surface 14. Of course other room configurations are possible. The user 12 is standing on said surface 14, e.g. in a tennis simulation application, or the sport equipment for the user is mounted on said surface, e.g. a boat with an oar within the rowing simulation. Tennis and rowing are interesting applications since the racket velocity in tennis can reach 37.5 m/s, the hand acceleration can be 27 m/s2, while hand force duringrowing can reach 800 N and peak power during rowing can reach 1000 to 1500 W.

The user-local environment 10 can be built by a frame 13, which combines several advantages. On one side, the surface between the frame posts 13 can be used as silver screens 15 for visualization, especially if three sidewalls are used which are in view of the user 12. It also possible to use the floor surface 14 as projection surface.

Additionally said frame 13 can be used to fix additional structural and load bearing elements as noted below, especially actuators 30 and deflection units 31, 32.

Fig. 1 shows a configuration of the robot with one actuator 30 positioned in one corner of the frame 13. The racket as interface element 20 is connected with the actuator 30 through a connection element 40 being a rope, cable, wire. The rope 40 is deflected twice at deflection units 31 and 32, wherein the arrow near the deflection unit 32 indicates that said deflection unit 32 can be displaced along the frame 13 before being fixed in position; i.e. said position can be adjusted. In an alternate embodiment deflection unit 32 is mounted on a rail and can be displaced during the simulation to change the deflection point of rope 40 within the space 10.

The feature that interface element 20 is physically connecting the device with a body part of the user comprises inter alia the possibility that the user holds the interface element, e.g. a racket, and also comprises the possibility that the user is directly connected with the device, e.g. the ropes are attached at an equipment of the user as gloves, a shoe, an arm portion or the torso of the user.

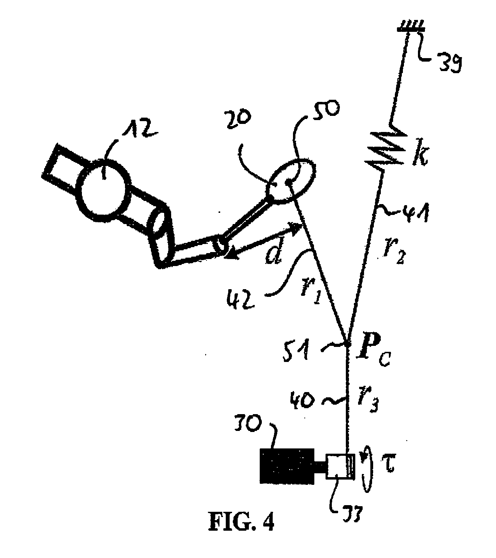

Fig. 1 shows one actuator 30 and one connection element 40 to introduce the general principles of the device. The actual arrangement of the connection elements 40 according to the invention are explained in connection with Fig. 4.

The number of actuators 30 is not fixed but can be adapted to each simulation task: for simple tasks such as 1D-contact problems, one or two ropes might be sufficient, while more complex, spatial tasks require the use of multiple ropes. The device implements a calculation of the distance between the user 12 and any rope 40. This method is not only a safety measure to prevent from a collision between the user 12 and the rope(s) 40. It also serves as a basis for more complex actuation and control concepts which increase the useable workspace within CAVE 10 and the number of implementable tasks.

The haptic device according to the invention is a large-scale and versatile user-cooperative rope robot. The large scale of the haptic device is achieved through providing a frame 13 having the dimensions of a room with a length of e.g. 4x6x5 meter. At least a part of one wall is a visual display 15. Preferably several entire walls of this room are part of a visual display. This can be achieved through projection of the virtual representation onto such walls being e.g. a silver screen. In the embodiment according to the invention three screens 15 are used to cover the entire visual field of a user inside the CAVE. Additional, 3D visual information can be displayed for a user of the system, if two projectors are used for every screen with slitghtly different projections and if the user is using corresponding different polarized glasses or glasses with red or green filters.

Additionally an audio display 16 is connected with the frame 13 and the visual display, e.g. a wave field synthesis sound system, arranged around and behind the screens 15 on three parts of the CAVE 10.

The ropes 40 represent the link between the actuator 30 and the user 12. Commonly used materials in rope robots are steel or different synthetic materials like Nylon, Armid, Kevlar, or Zylon. The selection of the rope depends mainly on the following parameters: specific weight (kg/m), break load FB (N), work stress (%), minimal bending radius rmin (m), tying, damping, and abrasion-resistance..

The position of the interface element 20 has to be monitored during any exercise. For this position measurement, the encoder attached to the motor of the actuator 30 is used for this measurement. The chosen motor has a high-resolution BISS-encoder allowing very precise longitudinal resolution of far below a millimeter. Of course, different encoders and motors can be used acording to the requirements of the simulation. Due to the high resolution, also the first and second derivatives of the position signals have little noise. In addition, the absolute motor angle of actuator 30 is measured with an analogue sensor. This redundant position measurement serves as a safety measure as it is often applied in user-cooperative devices but not mandatory. The analogue sensor makes the calibration of the robot axes dispensable because the absolute rope length can be derived. A wire potentiometer can be used, wound around an axis at the outer end of the drive train.

A second measurement relates to a force measurement: Different solutions for the measurement of rope forces or man-machine interaction forces in rope robots are possible. For instance, the forces can be measured at the motor unit or directly at the interface element 20. It is also possible to omit any force/torque measurement devices for actuators with constant current-to-torque ratio: then the rope force is only open loop controlled as . In the embodiment according to the invention, force sensors are integrated in the device for two reasons: firstly, more advanced, user-cooperative control strategies as admittance control can be implemented. And secondly, the integration of force sensors implies a significant increase of user safety. The force sensor is integrated into the deflection unit 31, which guides the rope from the motor/actuator 30 to the second deflection unit 32 as the deflection angle around this pulley is constant. The used sensors were one-roller tensionmeters (M1355, Tensometrics GmbH, Wuppertal, Germany) as they are implemented in coiling applications for tension control. The pulley at deflection unit 31 is mounted on the axis of the tension meter. A systematic measurement error results from the interaction forces between the deflection unit 32 and the rope 40.

Fig. 2 shows a schematic representation of a 1-DOF restrained rope robot embodiment for use with the device in Fig. 1. The hand of a user 12 is depicted holding an end-effector or interface element 20. This can be a racket or an oar or a different user-manipulated device, which is not necessarily attached to a hand but at any extremity of a user 12.

The connection element comprises a first rope 40 and a second rope 41. The first rope 40 is connected with a driven winch 33 as actuator unit 30. It is of course possible to provide intervening deflection units 31 and/or 32 between the winch 33 and the actuator 30. On the opposite side, mainly in the opposite direction, a second rope 41 is attached at the interface element 20. Said second rope can be attached to a second winch unit. A simpler embodiment uses a reel 34 which is in connection with a spring 35. Said spring 35 has a larger potential energy when the second rope 41 is uncoiled and has a smaller potential energy, when the second rope is wound on reel 34. Additionally it is possible and preferred to provide a brake 36 as safety measure. If the brake is controllable, it can be used to provide additional resisting torque to the winch axis.

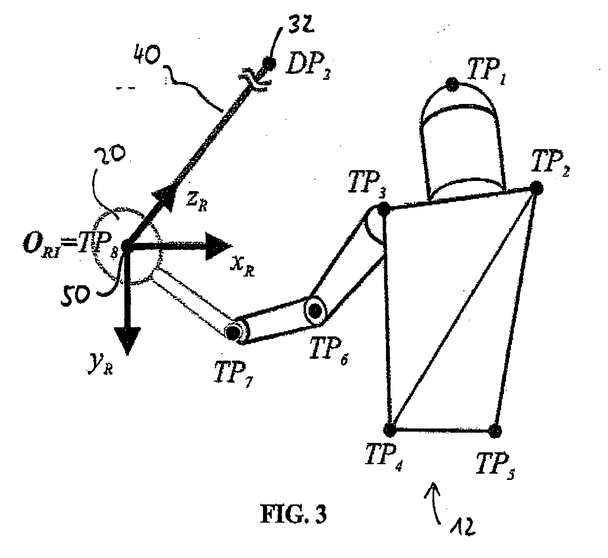

Fig. 3 shows a schematic representation of a user 12 - interface element 20 - rope 40 measurement design for use with the device in Fig. 1. In order to calculate the exact distance between the ropes 40 of the robot and the user 21, the poses of the user's single body parts during the entire exercise have to be known. Therefore, the user's movement was registered by a motion tracking system. Markers can be placed on the shoulders, hip, head and arm joints as well as on the end-effector point. Preferably, they are placed on all body parts whose movements are to be monitored. They have received the reference numerals TP1, TP2... to TP8. TP8 can also be named as being the attachment point 50 of rope 40 with interface element 20. These points define the position of geometrical objects representing the user. The user is represented by polyhedrons formed by triangles (upper body) and cylinders with spherical cubs on both ends (head and arms). There are several algorithms for collision detection and distance calculation available, e.g. from N. Pelechano "Real-Time Collision Detection Between Cloth and Skinned Avatars Using OBB" in Technical Report, Department of Computer Science, University College London, UK, 2002. However, the problem of collision detection between a wire and arbitrary objects can be simplified by appropriate measures compared to the general collision detection problem between arbitrary objects. Therefore, the control unit of the present haptic device uses collision detection between the ropes 40 and the user 12 as well as between different ropes 40, 41 etc. (auto-collision). Furthermore, it is capable of identifying the object closest to each rope 40 and the distance vector to this object. The basic idea is to describe the geometrical objects in coordinate systems $ORi$ ($i = 1..n$) whose z-axes are aligned with the direction vectors of the n ropes. Due to this transformation, the problem can be broken down to a collision detection between the parallel projection of the geometrical objects on the xy-plane of $ORi$ and a point (the origin of $ORi$) representing the rope. The parallel projection of the chosen objects as well as the calculation of the distance between the projection and a point need little computation time. Hence, the collision detection can run in real-time with a sampling frequency of approximately 1000Hz even for multiple ropes and complex bodies. The proper collision detection without the distance calculation can run independently at a even higher sampling frequency.

Either single points on the user's body are, therefore, tracked beforehand or in real time with a motion tracking system; or possible positions of the user's single body parts are predetermined and represented by geometrical objects whose distances to the ropes are calculated. The calculation was evaluated experimentally in two applications, a rowing simulator and a tennis application. Fig. 4 shows the collision detection between a rope 40, 41 and the user 12, wherein beside the user the connection point 51 of the rope 40 is tracked. The distance calculation allows the use of new kinematic concepts and expands the spectrum of realizable movement tasks that can be implemented into the CAVE environment.

Fig. 4 shows a schematic representation of a user 12 - interface element 20 - rope 40 embodiment of the invention for use with the device in Fig. 1. The collision detection and avoidance for a tennis simulation with one single curved trajectory is working with the setup according to Fig. 4: one distance connection element 42 as rope $r_1$ was connected to the end-effector 20, a tennis racket, grasped by the user 12. The second rope 41 $r_2$ was an elastic tendon (having spring constant k) whose end was fixed at frame position 39. The third rope 40 $r_3$ was connected to a drive train of actuator 30.

The loose ends of all three ropes 40, 41, and 42 were connected together at the connection point 51 $P_C$. This connection point 51 was tracked together with the markers on the user's body described above. Within a simplified embodiment, only the point 51 is tracked and the user is modulated in view of his more or less predictable position based on the constraints of the user position 12 (rowing position) or position in connection with the interface element 20 (the racket for tennis). In this setup, variation of the motor torque $\tau$ lead to changes of the system pre-tension and, thus, to for- and backward movements of the connection point 51 $P_C$. For $\tau = \tau_{min}$, the connection point 51 moved to the front of the room 10 (i.e. in Fig. 4 away from the actuation unit 30), while for the maximal pre-tension $\tau = \tau_{min} + \Delta\tau$, it moved to the very back of the room 10. The distance d between the distance connection element 42 $r_1$ and the user 12 was calculated as discussed in connection with Fig. 3. The motor torque τ was controlled in such way that a collision between the distance connection element 41 $r_1$ and the user 12 was avoided. Therefore the following control rule was applied as function of the distance d:

$$\tau = \tau_{min} + \Delta\tau \bullet \frac{\tilde{d} - d_{min}}{d_{max} - d_{min}}$$

with

$$\tilde{d} = \begin{cases} d_{max} \ldots for \ldots d > d_{max} \\ d_{min} \ldots for \ldots d < d_{min} \\ d \ldots otherwise \end{cases}$$

This control calculation assured that the distance connection element 42 $r_1$ was always pulled away from the user 12. The test person 12 could perform an entire forehand swing without colliding with the ropes 42, 40 and 41. Furthermore, the controller also reacted when single body parts were approached towards the rope, i.e. the user 12 could "push away" rope 41 $r_1$ with the elbow or the head without touching it. The calculation was performed at 1 kHz. Said calculation and control can be performed with higher or lower reaction time, depending on the specific constraints of the simulation.

It was mentioned above that rope robots usually have a predefined configuration, i.e. the deflection points 31, 32 from which the ropes enter the workspace 10 have got a fixed position. The fixed position of these deflection points 31, 32 limits the range of applications. The deflection units guide the rope from the actuation unit into the workspace. Their influence on the force transmission from the actuator 30 to the end-effector is preferably minimized. Thus, the deflection units 31, 32 should have low inertia and low friction. It is known to place the actuators of the robot at or near the deflection points where the ropes 40, 41 enter the workspace 10, most commonly at the corners of the robot frame 13. According to the invention, it is preferred to change the positions of the deflection points for different applications. The motor units with a substantial weight (of currently 13 kg) would not haveto be re-mounted to adapt the robot configuration. The motor units should be easily accessible which is not the case for the upper part of the frame (in 5m height). Thus, the actuators 30 are installed at a fixed position at the lower edges of the CAVE. Under this condition, at least two deflection points 31, 32, are needed for each rope to enter the workspace from any point of the frame. As can be seen in Fig. 1, the first deflection unit 31 at DP1 guides the rope from the winch 30 to the second deflection point 32 DP2. The first deflection unit 31 can be realized with a simple pulley as the angles between the pulley and the rope hardly change. The pulley is a product made of ERTALON with standard ball bearings, allowing for a preferred low-friction passage between the pulley surfaces. In this respect it is important that the pulleys define a specific passage line for the rope.

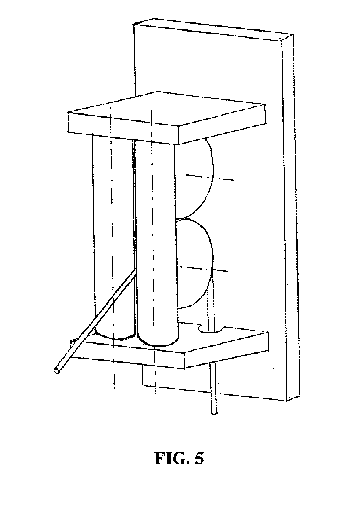

The second deflection unit 32 at DP2 guides the rope into the workspace. It is known from prior art, that the rope is guided through a small hole into the workspace. This solution facilitates kinematical calculation but leads to elevated friction and rope abrasion at the deflection point 32. Therefore a new deflection unit was designed. Said deflection unit is shown in Fig. 5 and can be used independently from the haptic device as mentioned in this specification.

Fig. 5 shows a schematic view of a deflection unit 32 embodiment of the invention. The deflection unit 32 is attached at a portion of the frame 13. It is also possible to attach the deflection unit 32 at a separate frame provided inside or outside the ground plate 14.

The deflection unit 32 comprises two pulleys 101 and 102 mounted on parallel axes 111 and 112, which are horizontal in the embodiment shown. The rope 40 is guided from below around the lower pulley 102 and between these pulleys 101 and 102. The distance between the pulleys 101 and 102 is chosen to allow that the rope 40 is guided between the pulleys. The rope 40 is guided inside the workspace in a first plane which is orthogonal to the axes 111, 112 of the pulleys 101, 102.

The deflection unit 32 further comprises two rollers 121 and 122 which are mounted on axes 131 and 132 parallel to the first plane, which are vertical in the embodiment shown. The distance between the rollers 121 and 122 is chosen to allow the rope to be guided between the rollers into the workspace. It is clear that the above-mentioned first plane passes between the rollers. A second plane is defined by the plane spanned by the two axes 131, 132 of the rollers 121, 122. Then the section of the line defined by the section of the two planes defined the possible orientations of the rope in view of the height at said point. The rollers 121, 122 allow a simple change of the direction of the guided rope 40 outside the first plane without exerting undue friction.

In other words, the deflection unit 32 according to Fig. 5 guides the rope 40 via two pulleys 101, 102 and two rollers 121, 122 in any direction into the workspace. Compared to swivel castors, this unit 32 does not contain oscillating elements which could lead to lateral oscillation of the rope 40. Furthermore, the rope cannot derail. If the deflection unit 32 is mounted behind the screen 15, then the rope 40 is guided through a narrow gap between portions of such a screen 15.

LIST OF REFERENCE SIGNS

| | | | |
|----|---------------------------|----|---------------------------|
| 10 | room / local user environment | 33 | driven winch |
| 11 | haptic interface | 34 | reel |
| 12 | user | 35 | spring |
| 13 | frame | 36 | brake |
| 14 | surface | 39 | frame position |
| 15 | screen | 40 | first rope |
| 16 | loudspeaker | 41 | second rope |
| 20 | interface element | 42 | distance connection element |
| 30 | actuator | 50 | attachment point |
| 31 | deflection unit | 51 | connection point |
| 32 | deflection unit | | |

**Claims**

1. A haptic interface (11) for a virtual environment for physically exchanging a force with a user (12) in a user-local environment (10), comprising:

   - an interface element (20) for physically connecting to a body part of the user (12),
   - at least one connection element (40) linking (50) said interface element (20) to said user-local environment (10), and
   - a control unit for controlling the spatial position of the interface element (20) and/or the force exerted by the interface element (20) through driving at least one connection element (40),

   **characterized in that** at least two connection elements (40, 41) are provided being connected to different points of said user-local environment (10), wherein the two connection elements (40, 41) join in a connection point (51), wherein a distance connection element (42) is linking said interface element (20) with said connection point (51).

2. The interface according to claim 1, wherein at least the two connection elements (40, 41) are ropes, wires or cables.

3. The interface according to claim 2, wherein user-local environment (10) comprise at least one actuator (30) adjusting the length of the ropes (40, 41) inside the user-local environment (10) for controlling the spatial position of the interface element (20) through its connection with said connection point (51).

4. The interface according to claim 3, wherein user-local environment (10) comprise a frame (13), wherein the actuator (s) (30) are attached at said frame.

5. The interface according to claim 4, wherein the actuator(s) (30) are attached at said frame (13) near its ground surface (14) and wherein the interface (11) comprise at least one deflection unit (31, 32) for deflecting at least one of the cables (40, 41).

6. The interface according to claim 5, wherein at least one deflection unit (31, 32) is adapted to be mounted at different positions at the frame (13) for deflecting at least one of the cables (40, 41) into the workspace inside the frame (13)..

7. The interface according to one of claims 3 to 6, wherein at least one of the ropes (40, 41) is an elastic rope (41) being fixedly (39) attached at the user-local environment (10).

8. The interface according to one of claims 3 to 6, wherein at least one of the ropes (41) is wound on a reel (34) attached at the user-local environment (10), wherein the rope (41) is under pre-tension through use of a spring (35) acting on said reel (34).

9. The interface according to one of claims 1 to 8, wherein the connection point (51) or the attachment point (50) comprise a marker and wherein in vicinity of the user-local environment (10) at least one sensor is provided adapted to detect the position of said marker to provide a control signal for said control unit.

10. The interface according to claim 9, wherein the user (12) is equipped with at least one additional marker and wherein said sensor or additional sensors are adapted to detect the position of said additional marker(s) to provide a control signal for said control unit.

11. A deflection unit (32), preferably for use in connection with a haptic device (11) according to claim 5 or 6, comprising two pulleys (101, 102) mounted on horizontal axes (111, 112), wherein the distance between the pulleys (101, 102) is chosen to allow a rope (40) to be guided between the pulleys, and further comprising two rollers (121, 122) mounted on vertical axes (131, 132), wherein the distance between the rollers (121, 122) is chosen to allow the rope (40) to be guided between the rollers (121, 122).

**FIG. 1**

**FIG. 2**

FIG. 3

FIG. 4

**FIG. 5**

Europäisches
Patentamt

European
Patent Office

Office européen
des brevets

# EUROPEAN SEARCH REPORT

Application Number

EP 09 00 6333

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JOACHIM VON ZITZEWITZ, PETER WOLF, VLADIMIR NOVAKOVIC, MATHIAS WELLNER, GEORG RAUTER, ANDREAS BRUNSCHWEILER, ROBERT RIENER: "Real-time rowing simulator with multimodal feedback" SPORTS TECHNOLOGY, vol. 1, no. 6, 2008, pages 257-266, XP002549434 DOI: 10.1002/jst.65 * the whole document * | 1-10 | INV. G06F3/01 A63B69/00 A63B21/00 G09B9/00 |
| X | US 2007/171199 A1 (GOSSELIN CLEMENT [CA]) 26 July 2007 (2007-07-26) * paragraphs [0043] - [0070]; figures 1-5 * | 1-10 | |
| X | FR 2 913 625 A1 (HAPTION SA SA [FR]) 19 September 2008 (2008-09-19) * page 8, line 10 - page 13, line 22; figures 1-10 * | 1-10 | |
| X,D | ZITZEWITZ J V ET AL: "Hybrid actuation concepts for a rope robot as a haptic interface" BIOMEDICAL ROBOTICS AND BIOMECHATRONICS, 2008. BIOROB 2008. 2ND IEEE RAS&EMBS INTERNATIONAL CONFERENCE ON, IEEE, PISCATAWAY, NJ, USA, 19 October 2008 (2008-10-19), pages 692-697, XP031413268 * the whole document * | 1-10 | TECHNICAL FIELDS SEARCHED (IPC) G06F A63B G09B |
| A | ANONYMOUS: "r3 - A Tendon-Based Haptic Interface for the M3 Lab."[Online] 3 November 2008 (2008-11-03), XP002549435 Retrieved from the Internet: URL:http://www.smsmavt.ethz.ch/research/projects/m3/r3> [retrieved on 2009-10-08] * the whole document * | 5-6 | |

-/--

~~The present search report has been drawn up for all claims~~

| Place of search | Date of completion of the search | Examiner |
|---|---|---|
| The Hague | 8 October 2009 | Legrand, J |

Europäisches
Patentamt

European
Patent Office

Office européen
des brevets

**EUROPEAN SEARCH REPORT**

Application Number

EP 09 00 6333

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ANONYMOUS: "M3 System Setup" [Online] 23 October 2008 (2008-10-23), XP002549436 Retrieved from the Internet: URL:http://www.smsmavt.ethz.ch/research/projects/m3/system_setup> [retrieved on 2009-10-08] * the whole document * | 9-10 | |

TECHNICAL FIELDS
SEARCHED (IPC)

~~The present search report has been drawn up for all claims~~

| Place of search | Date of completion of the search | Examiner |
|---|---|---|
| The Hague | 8 October 2009 | Legrand, J |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

Europäisches
Patentamt

European
Patent Office

Office européen
des brevets

**Application Number**

EP 09 00 6333

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-10

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 09 00 6333

The Search Division considers that the present European patent application does not comply with the requirements of unity of invention and relates to several inventions or groups of inventions, namely:

```
1. claims: 1-10

            a haptic interface with deflection units.
                ---

2. claim: 11

            an apparatus for guiding ropes.
                ---
```

**ANNEX TO THE EUROPEAN SEARCH REPORT
ON EUROPEAN PATENT APPLICATION NO.**                EP 09 00 6333

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2009

| Patent document cited in search report | | Publication date | Patent family member(s) | Publication date |
|---|---|---|---|---|
| US 2007171199 | A1 | 26-07-2007 | NONE | |
| FR 2913625 | A1 | 19-09-2008 | NONE | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9510080 A
- EP 1452949 A1

- WO 2008080917 A

**Non-patent literature cited in the description**

- Scaleable SPIDAR: A Haptic Interface For Human-Scale Virtual Environments. Haptic HCI 2000, LNCS. 2001, vol. 2058, 182-193
- **Joachim v. Zitzewitz ; Georg Rauter ; Andreas Brunschweiler ; Robert Riener.** Hybrid actuation concepts for a rope robot as a haptic interface. *Proc. IEEE International Conference on Biomedical Robotics and Biomechatronics,* 2008
- **Mohammad M. Aref et al.** Geometrical Workspace Analysis of a Cable-driven Redundant Parallel Manipulator: KNTU CDRPM. *IEEE/RSJ International Conference on Intelligent Robots and Systems in Nice,* 22 September 2008

- **Yonatan Wischnitzer et al.** Wire-driven parallel robot: permitting collisions between wires. *The International Journal of Robotics Research,* September 2008, vol. 27 (9), 1007-1026
- **N. Pelechano.** Real-Time Collision Detection Between Cloth and Skinned Avatars Using OBB. *Technical Report, Department of Computer Science,* 2002